# FASCICULE DE BREVET EUROPEEN

(11) **EP 1 125 720 B1**
(45) Date de publication et mention de la délivrance du brevet: **26.03.2003**
(21) Numéro de dépôt: 00403700.8
(22) Date de dépôt: 28.12.2000
(51) Int. Cl.: B29C 63/04

(54) **Procédé et dispositif de fabrication d'une pièce décorée**
Verfahren und Vorrichtiung zur Herstellung eines dekorierten Gegenstandes
Process and apparatus for making a decorated object

(30) Priorité: 15.02.2000 FR 0001819
(43) Date de publication de la demande: 22.08.2001
(73) Titulaire: EUROSTYLE (S.A.), F-91370 Verrières le Buisson (FR)
(72) Inventeur: Beckmann, Andreas, 32120 Hiddenhausen (DE); Lecomte, Eric, 36120 Ardentes (FR)
(74) Mandataire: Viard, Jean

(56) Documents cités:
- EP-A- 0 495 292
- DE-A- 19 500 233
- US-A- 4 016 025
- US-A- 4 385 090

## Description

La présente invention a pour objet un procédé de fabrication d'une pièce décorée dans lequel une feuille de décor multicouches avec un dos en mousse est amenée sur une pièce support, la feuille de décor comprenant un dos de mousse et entourant au moins dans une région de bord de la partie support par le décor et un dispositif de mise en oeuvre du procédé.

Pour la fabrication de pièces avec une surface supérieure décorée, en particulier par un matériau de décor, l'ensemble doit être travaillé, malgré les inconvénients, avec une couche de mousse. La pièce obtenue doit, en particulier, présenter une bonne présentation quand l'épaisseur de mousse est comprise entre 0,5 et 5 mm. Pour des considérations optiques, un passage angulaire aigu ou une transition avec un rayon maximal de 2 mm, doit être laissé sur les parties limites des pièces dans la partie extérieure des bords. Cela implique pour la partie que, dans la région des bords un pliage de la feuille de 90° ou un repliage de 180° est nécessaire. Dans le cas où la sous-couche de mousse recouvre les bords respectifs dans la région du rembordement, l'épaisseur de la mousse génère un rayon plus ou moins grand ce qui, n'est pas désirable si l'on veut obtenir une excellente finition du rembordement.

L'enseignement de l'invention concerne un procédé tel que décrit dans la revendication 1 et un dispositif tel que décrit dans la revendication 9 de fabrication d'une pièce décorée sur laquelle est amené un décor multicouches composé d'un dos en mousse et d'une feuille de décor, sur une partie support de la pièce, qu'il entoure dans la région de bord avec un angle aigu ou un rayon maximal de 2mm.

Le procédé selon l'invention pour la fabrication d'une pièce décorée par application d'un matériau de décor comprenant un dos en mousse est caractérisé en ce que:
- le décor est dans une première étape amené sur la pièce avec au moins une prise dans la région de bord;
- puis dans une seconde étape, l'épaisseur de la mousse est réduite par un chauffage dans la zone correspondante du bord puis étirée; et,
- dans une étape ultérieure, l'ensemble décor ou la feuille de décor débordante est fixé sur la pièce.

De préférence, le dos de mousse a une épaisseur comprise entre 0,5 et 5 mm. Avantageusement, il est prévu que le décor ou sa partie débordante entoure la région du bord de la pièce avec un rayon maximal de 2 mm.

Pour permettre le rembordement, l'épaisseur de la mousse dans ladite zone est réduite ou éliminée par laser, et/ou par haute fréquence, et/ou chauffage et/ou par étirage.

On peut prévoir que le décor ou sa partie débordante, en particulier dans la région des angles et/ou du contour, et/ou de la zone de contour de la partie support de la pièce est étiré avant et/ou pendant la troisième étape.

Il peut être prévu qu'une dépression peut être appliquée sur le dos de mousse sur la partie à remborder, à l'opposé du décor, et/ou qu'une surpression soit appliquée du côté de la feuille de décor, à l'opposé de la mousse, dans la troisième étape.

La dite zone, entourant la région du bord peut être étirée avant la seconde ou troisième étape. Ainsi, il peut être aussi prévu que ladite zone entre les parties support de la pièce et la zone étirée du décor soient chauffées et étirées par un coulisseau mécanique, avant la troisième étape, par rapport au support et déplacées dans la région tendue du bord.

L'invention concerne également un dispositif de mise en oeuvre du procédé avec un plateau mobile de support pour maintenir une pièce qui doit être décorée et revêtue d'un matériau multicouches de décor dans sa partie support, la pièce comprenant une région de bord, un dispositif de saisie pour saisir et maintenir fermement le matériau du décor dans une zone de bord de la pièce correspondante et avec un dispositif de chauffage pour chauffer la liaison de décor dans la région de ladite zone.

Il peut être prévu que le plateau ait une surface support en cuvette.

Avantageusement, le plateau est monté mobile à l'intérieur de la machine de sorte qu'il constitue un moyen de tension agencé dans le corps de machine par lequel les éléments de saisie rendent possible un retour de la feuille.

Dans un mode de réalisation, il est prévu un deuxième plateau, également dans le dispositif de formage, en regard du premier plateau agencé de sorte que la pièce à décorer soit emprisonnée entre les premier et second plateaux pour que le support de la pièce soit proche du premier plateau et le décor proche du deuxième plateau.

Le dispositif de chauffage peut être du côté de la feuille et/ou du côté de la couche de mousse.

On peut également prévoir un élément auxiliaire mobile de formage pour étirer les extrémités du décor entre le dispositif de saisie et le ou les plateaux.

Dans une réalisation de l'invention, il peut être prévu que, sur le côté du premier ou du second plateau, soit aménagée une chambre étanche à la pression pour influer par dépression ou surpression sur la déformation de la zone entre le dispositif de saisie et la région de bord de la pièce.

D'autres caractéristiques et avantages de l'invention apparaîtront au cours de la description qui va suivre de deux modes particuliers de réalisation, donnés uniquement à titre d'exemples non limitatifs, en regard des dessins qui représentent :
- la figure 1, un dispositif de mise en oeuvre du procédé selon l'invention en position de repos;
- la figure 2, le dispositif de la figure 1 en position de travail;
- la figure 3, L'unité A du dispositif de la figure 2 dans une variante;
- la figure 4, un dispositif modifié en position de travail;
- la figure 5, le dispositif de la figure 4 après une autre modification en position de travail.

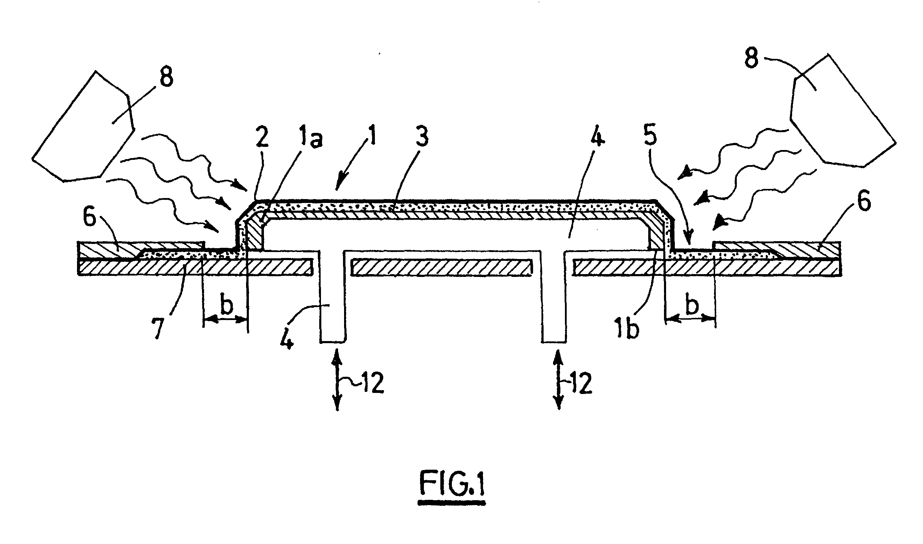

Sur la figure 1, on voit que le décor constitué par un dos de mousse 3 et une feuille de décor 2 est amené sur une partie support la de la pièce à décorer avec une réduction d'épaisseur du dos de mousse par une irradiation énergétique, par un dispositif approprié 8, à l'intérieur d'une zone périphérique 5 sur une largeur « b», ce par quoi la zone 5 dans la région du bord 1b du support la correspond avec une zone de bord entourée par le décor. La région 1b avec son dos de mousse d'épaisseur réduite (appelée dos de mousse par la suite) et la feuille de décor reposent sur le plateau 4. Il en résulte que le décor est pincé dans la région entre une table de machine 7 et une ou plusieurs pinces 6.

Ensuite, le chauffage de la feuille de décor 2 avec un dos de mousse 3 est effectué dans la zone 5 entre la pièce 1 et les pinces 6 à l'aide d'une source d'énergie 8.

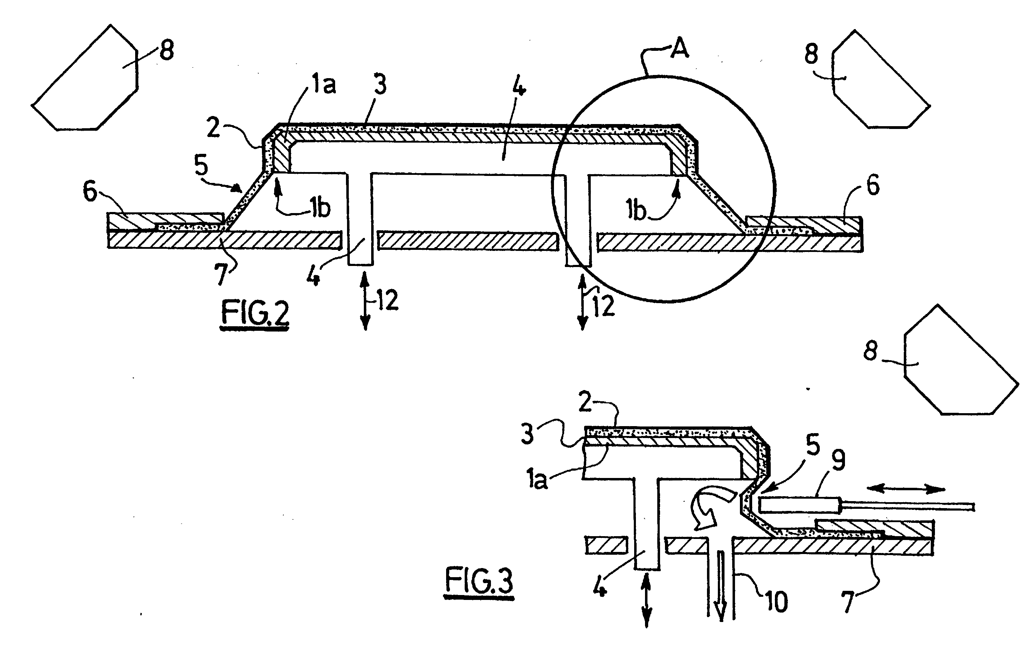

La figure 2 représente l'étape suivante. Après chauffage de la feuille 2 et du dos de mousse 3 dans la zone 5, le plateau 4 est élevé, à l'aide d'un entraînement (non représenté) comme indiqué schématiquement par les flèches 12 et il en résulte une nouvelle réduction d'épaisseur du décor 2,3. Cette déformation peut être effectuée avec ou sans chauffage simultané par la source d'énergie 8. Une irradiation pendant le mouvement de déformation dépend de la vitesse de déformation et de la capacité thermique du matériau de décor 2,3 qui permettent de déterminer si le chauffage doit être effectué ou non, sans problème de déformation.

Comme représenté sur la figure 3 qui montre, à échelle agrandie, la lunette A de la figure 2, dans une variante de réalisation, il est possible durant ou après le formage de faire appel à un organe intermédiaire tel qu'un coulisseau ou tiroir 9 pour conformer la feuille 2 et la mousse 3 dans la région de l'angle ou pour obtenir un contour. Pour obtenir une telle déformation, avec ou sans action simultanée du coulisseau 9, il est possible d'appliquer le décor avec une surpression ou une dépression dans la région entre les pinces 6, la table 7, la pièce 1 et le décor 2,3 qui constituent une chambre fermée 11 qui peut correspondre avec une ou plusieurs ouvertures 10.

Le rembordement du décor sous le côté inférieur de la région 1b de la pièce 1 peut résulter d'un mécanisme tel que le coulisseau ou être effectué manuellement.

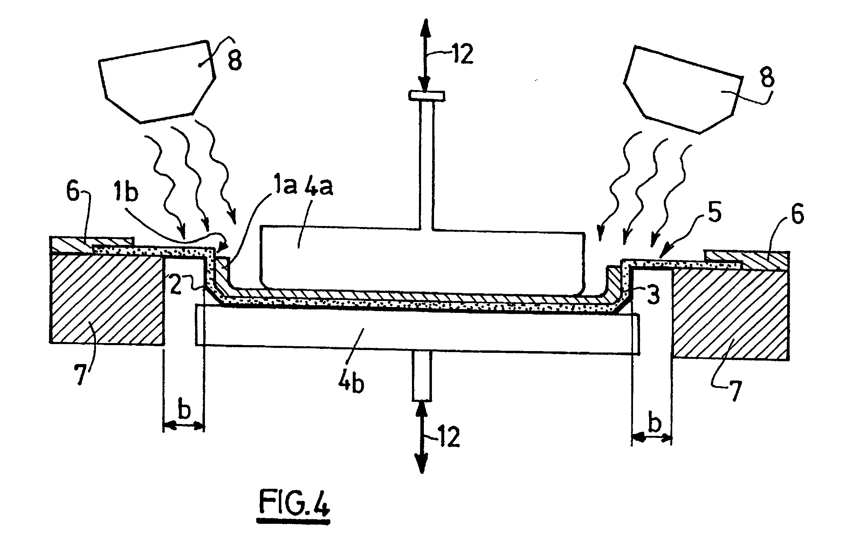

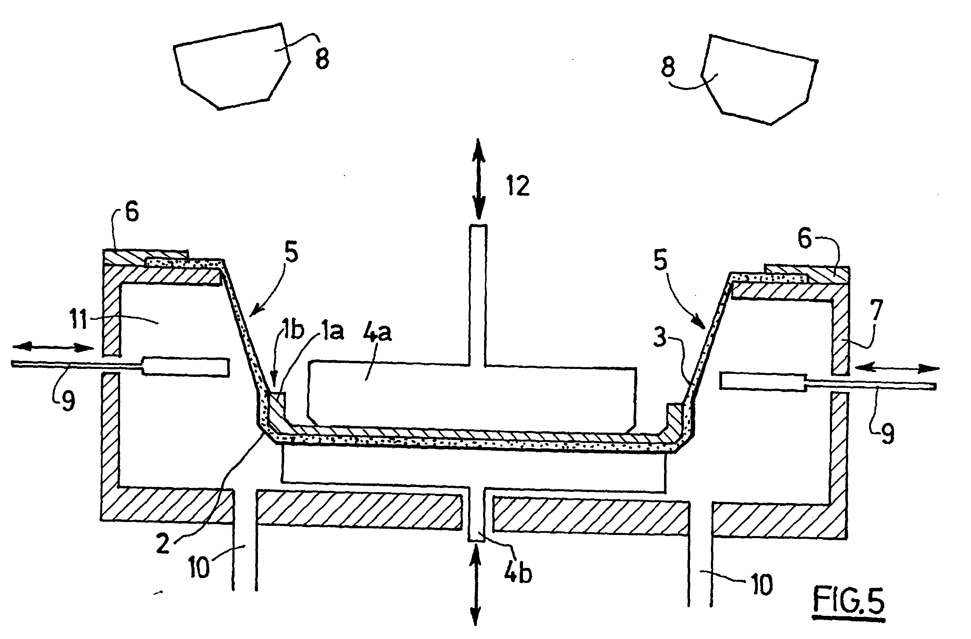

Les figures 4 et 5 représentent une forme modifiée de l'invention. Une pièce 1, qui doit être recouverte avec une feuille décor et un dos de mousse, repose sur le plateau 4b et la feuille et le dos de mousse sont maintenus par leur bord et tendus par des pinces 6 sur la table 7. Un deuxième plateau 4a en forme de poinçon est amené au-dessus de la face intérieure de la pièce 1. Ainsi, le matériau plastique de la pièce 1 est protégé des effets de l'irradiation énergétique permettant de réduire l'épaisseur du matériau de décor. La réduction de l'épaisseur du dos de mousse est obtenue dans la zone 5 à l'aide d'une ou plusieurs sources d'énergie 8.

Par l'emprisonnement simultané de la pièce 1 à l'aide des deux plateaux 4a,4b, l'épaisseur du dos de mousse et de la feuille est à nouveau réduite.

Pendant ou après le formage, une chambre creuse éventuelle 11 (Fig.5) peut être utilisée entre la pièce 1, le dos de mousse 3, le matériau de décor 2 et la table 7 de la machine pour créer une surpression ou une dépression pendant et/ou après le formage, l'épaisseur de la mousse et de la feuille étant encore réduite.

Simultanément à, ou après, le formage peuvent être formés des angles ou des contours spéciaux à l'aide des coulisseaux 9 et le rembordement, respectivement le pliage du décor autour du bord et l'épaisseur du matériau de décor est encore réduite. Ainsi, dans la région des angles existe un recouvrement préformé de la pièce qui rend la coupe en reprise non nécessaire.

Il est possible d'utiliser toutes les matières thermoplastiques ou thermodurcissables. Par l'utilisation de polyoléfines, lors d'un traitement thermique, la matière devient active et ainsi rend possible une soudure ou collage sans autre traitement préalable.

Il va de soi que de nombreuses variantes peuvent être apportées, notamment par substitution de moyens techniques équivalents, sans sortir pour cela du cadre de l'invention.

## Revendications

1. Procédé de fabrication d'une pièce décorée (1) dans lequel un décor multicouches composé d'un dos en mousse (3) et d'une feuille de décor (2) est amené sur une partie support (1a) de la pièce, qu'il entoure dans la région de bord (1b), et dans lequel
- le décor (2,3) est dans une première étape amené sur la pièce (1a) et maintenu dans au moins une région de bord (1b);
- puis dans une seconde étape, l'épaisseur de la mousse (3) est réduite par un chauffage dans la zone (5) du bord et/ou étirage; et
- dans une troisième étape l'ensemble décor (2,3) ou la feuille de décor débordante est fixé sur au moins un bord (1b) de la pièce (1).

2. Procédé selon la revendication 1, **caractérisé en ce que** l'épaisseur au repos du dos de mousse (3) est comprise entre 0,5 et 5 mm.

3. Procédé selon la revendication 1 ou 2, **caractérisé en ce que** l'ensemble décor (2,3) ou la feuille restante de décor est rembordée dans une région de bord (1b) avec un rayon maximal de 2 mm.

4. Procédé selon l'une quelconque des revendications précédentes, **caractérisé en ce que** l'épaisseur du dos de mousse (3) dans la zone (5) entourant le bord du décor (2, 3) est réduite par une irradiation laser, et/ou haute fréquence et/ou thermique et/ou étirage.

5. Procédé selon l'une quelconque des revendications précédentes, **caractérisé en ce que** le décor (2,3) en particulier dans la région des angles et/ou des contours de la pièce (1a) est étiré avant et/ou pendant la troisième étape.

6. Procédé selon l'une quelconque des revendications précédentes, **caractérisé en ce que** le dos de mousse (3) est soumis, durant la troisième étape à une dépression du côté de la mousse (3) et/ou à une surpression du côté de la feuille (2) et/ou est étiré mécaniquement.

7. Procédé selon l'une quelconque des revendications précédentes, **caractérisé en ce que** la zone (5) entourant le bord du décor (2,3) est tendue avant les deuxième et troisième étapes.

8. Procédé selon la revendication 7, **caractérisé en ce que** le décor est chauffé et tendu entre la pièce support (1a) et la zone (5) entourant le bord du décor (2,3) par un mouvement relatif dans la région du bord (4,6,7).

9. Dispositif de mise en oeuvre du procédé selon l'une quelconque des revendications précédentes, comprenant, dans le dispositif de formage (12), un plateau mobile (4) pour soutenir la pièce (1) comportant une partie support (1a) d'un décor multicouches (2,3) et une région de bord (1b), des moyens de saisie (6,7) pour saisir le décor dans la région de bord (1b) de la pièce (1) dans la zone (5) entourant le bord du décor (2, 3) et un dispositif d'irradiation (8) pour chauffer le décor dans la région de ladite zone(5) et réduire l'épaisseur de la mousse.

10. Dispositif selon la revendication 9, **caractérisé en ce que** le plateau (4) présente une surface en cuvette.

11. Dispositif selon la revendication 9 ou 10, **caractérisé en ce que** le plateau (4) est mobile à l'intérieur du corps de machine (7) les éléments de saisie (6) étant montés sur le corps (7).

12. Dispositif selon l'une des revendications 9 à 11, **caractérisé en ce qu'**un deuxième plateau (4a)s'étend dans le dispositif de formage (12) au-dessus du premier plateau (4b, les deux plateaux (4a,4b) enserrant la pièce (1) et la feuille de décor (2) reposant au voisinage du second plateau (4a).

13. Dispositif selon l'une des revendications 9 à 12, **caractérisé en ce que** le (ou les) dispositif d'irradiation (8) se trouve(nt) du côté de la feuille de décor (2) et/ou du côté de la mousse (3).

14. Dispositif selon l'une des revendications 9 à 13, **caractérisé en ce que** des éléments auxiliaires de formage (9) sont mobiles transversalement pour tendre les extrémités du décor dans la zone (5) entre les éléments de saisie (6,7) et le ou les plateaux (4,4a).

15. Dispositif selon l'une des revendications 9 à 14, **caractérisé en ce que** sur le côté du premier ou du deuxième plateau (4a,4b) est prévue une chambre étanche de pression (11) qui, par surpression ou dépression, assure le formage des coupes de décor à l'intérieur de la zone (5) entre le dispositif de saisie (6,7) et la zone de bord.

## Claims

1. A method of making a decorative component (1) wherein a multilayer facing made up of a foam back (3) and a facing sheet (2) is placed on a substrate (1a) of the component and surrounds the edge region (1b) thereof and wherein
- in a first step the facing (2, 3) is placed on the component (1a) and held in at least one edge region (1b);
- in a second step, the thickness of the foam (3) is reduced by stretching and/or by heating in the edge zone (5), and
- in a third step the decorative assembly (2, 3) or the overlapping facing sheet is fixed on at least one edge (1b) of the component (1).

2. A method according to claim 1, **characterised in that** the thickness of the foam back (3) at rest is between 0.5 and 5 mm.

3. A method according to claim 1 or 2, **characterised in that** the decorative assembly (2, 3) or the remaining sheet of facing is turned over in an edge region (1b) with a maximum radius of 2 mm.

4. A method according to any of the preceding claims, **characterised in that** the thickness of the foam back (3) in the zone (5) surrounding the edge of the facing (2, 3) is reduced by laser irradiation and/or high frequency and/or heating and/or stretching.

5. A method according to any of the preceding claims, **characterised in that** the facing (2, 3), particularly at corners and/or contours of the component (1a), is stretched before and/or during the third step.

6. A method according to any of the preceding claims, **characterised in that** during the third step the foam back (3) is subjected to negative pressure on the side of the foam (3) and/or excess pressure on the side of the sheet (2) and/or is mechanically stretched.

7. A method according to any of the preceding claims, **characterised in that** the zone (5) surrounding the decorative edge (2, 3) is stretched before the second and third steps.

8. A method according to claim 7, **characterised in that** the facing is heated and stretched between the substrate (1a) and the zone (5) surrounding the edge of the facing (2, 3) by relative motion in the edge region (4, 6, 7).

9. A device for working the method according to any of the preceding claims, comprising a moving plate (4) in the shaping device (12) for holding the component (1) comprising a substrate (1a) of a multilayer facing (2, 3) and an edge region (1b), gripping means (6, 7) for gripping the facing in the edge region (1b) of the component (1) in the zone (5) surrounding the edge of the facing (2, 3), and an irradiation device (8) for heating the facing in the neighbourhood of the said zone (5) and for reducing the thickness of the foam.

10. A device according to claim 9, **characterised in that** the plate (4) has a cup-shaped surface.

11. A device according to claim 9 or 10, **characterised in that** the plate (4) is movable inside the machine body (7), the gripping elements (8) being mounted on the body (7).

12. A device according to any of claims 9 to 11, **characterised in that** a second plate (4a) extends in the shaping device (12) above the first plate (4b), the two plates (4a, 4b) gripping the component and the facing sheet (2) resting near the second plate (4a).

13. A device according to any of claims 9 to 12, **characterised in that** the irradiation device or devices are disposed on the same side as the facing sheet (2) and/or on the same side as the foam (3).

14. A device according to any of claims 9 to 13, **characterised in that** auxiliary forming components (9) are transversely movable in order to stretch the ends of the facing in a zone (5) between the gripping elements (6, 7) and the plate or plates (4, 4a).

15. A device according to any of claims 9 to 14, **characterised in that** a sealing-tight pressure chamber (11) is disposed on the side of the first or the second plate (4a, 4b) in order, by excess pressure or negative pressure, to shape cut areas of the facing inside the zone (5) between the gripping device (6, 7) and the edge zone.

## Patentansprüche

1. Verfahren zur Herstellung eines dekorierten Gegenstandes (1), bei dem ein mehrschichtiges Dekor gebildet aus einem Schaumrücken (3) und einem Dekorfilm (2) auf ein Trägerteil (1a) des Gegenstandes aufgebracht wird, das den Randbereich (1b) umgibt, und bei dem
- das Dekor (2, 3) in einer ersten Stufe auf den Gegenstand (1a) aufgebracht wird und in mindestens einem Randbereich (1b) gehalten wird;
- dann in einer zweiten Stufe die Dicke des Schaums (3) durch ein Erwärmen in der Zone (5) des Randes und/oder Strecken reduziert wird; und
- in einer dritten Stufe die Dekoranordnung (2,3) oder der überstehenden Dekorfilm mindestens auf einem Rand (1b) des Gegenstandes (1) fixiert wird.

2. Verfahren nach Anspruch 1, **dadurch gekennzeichnet, dass** die Dicke des Schaumrückens (3) unbenutzt zwischen 0,5 bis 5 mm liegt.

3. Verfahren nach Anspruch 1 oder 2, **dadurch gekennzeichnet, dass** die Dekoranordnung (2,3) oder der verbleibende Dekorfilm in einem Randbereich (1b) mit einem Streifen von maximal 2 mm eingefasst wird.

4. Verfahren nach einem der vorhergehenden Ansprüche, **dadurch gekennzeichnet, dass** die Dicke des Schaumrückens (3) in der Zone (5) um den Rand des Dekors (2,3) durch eine Laserbestrahlung und/oder Hochfrequenz und/oder Wärme und/oder Strecken reduziert wird.

5. Verfahren nach einem der vorhergehenden Ansprüche, **dadurch gekennzeichnet, dass** das Dekor (2, 3) insbesondere im Bereich der Winkel und/oder der Kontouren des Gegenstandes (1a) vor und/oder während der dritten Stufe gestreckt wird.

6. Verfahren nach einem der vorhergehenden Ansprüche, **dadurch gekennzeichnet, dass** der Schaumrücken (3) während der dritten Stufe auf der Schaumseite (3) einem Unterdruck und/oder auf der Filmseite (2) einem Überdruck ausgesetzt wird und/oder mechanisch gestreckt wird.

7. Verfahren nach einem der vorhergehenden Ansprüche, **dadurch gekennzeichnet, dass** die Zone (5) um den Rand des Dekors (2,3) vor der zweiten und dritten Stufe gespannt wird.

8. Verfahren nach Anspruch 7, **dadurch gekennzeichnet, dass** das Dekor erwärmt und zwischen dem Trägerteil (1a) und der Zone (5) um den Rand des Dekors (2,3) durch eine relative Bewegung im Randbereich (4,6,7) gespannt wird.

9. Vorrichtung zur Durchführung des Verfahrens nach einem der vorhergehenden Ansprüche umfassend in der Formvorrichtung (12) eine bewegliche Platte (4) zum Stützen des Gegenstandes (1) umfassend einen Trägerteil (1a) eines mehrschichtigen Dekors (2,3) und einen Randbereich (1b), Greifmittel (6,7) zum Greifen des Dekors im Randbereich (1b) des Gegenstandes (1) in der Zone (5) um den Rand des Dekors (2,3) und eine Bestrahlungsvorrichtung (8) zum Erwärmen des Dekors im Bereich der Zone (5) und Reduzieren der Dicke des Schaums.

10. Vorrichtung nach Anspruch 9, **dadurch gekennzeichnet, dass** die Platte (4) eine gewölbte Fläche aufweist.

11. Vorrichtung nach Anspruch 9 oder 10, **dadurch gekennzeichnet, dass** die Platte (4) im Inneren eines Maschinengehäuses (7) beweglich ist, wobei die Greifelemente (6) auf dem Gehäuse (7) angebracht sind.

12. Vorrichtung nach einem der Ansprüche 9 bis 11, **dadurch gekennzeichnet, dass** eine zweite Platte (4a) sich in der Formvorrichtung (12) über der ersten Platte (4b) erstreckt, wobei die beiden Platten (4a,4b) den Gegenstand (1) einspannen und der Dekorfilm (2) im Bereich der zweiten Platte (4a) ruht.

13. Vorrichtung nach einem der Ansprüche 9 bis 12, **dadurch gekennzeichnet, dass** die Bestrahlungsvorrichtung(en) (8) sich auf der Seite des Dekorfilms (2) und/oder auf der Seite des Schaums (3) befindet(en).

14. Vorrichtung nach einem der Ansprüche 9 bis 13, **dadurch gekennzeichnet, dass** Formhilfselemente (9) quer beweglich sind, um die Enden des Dekors in der Zone (5) zwischen die Greifelemente (6,7) und. die eine oder mehreren Platten (4,4a) zu spannen.

15. Vorrichtung nach einem der Ansprüche 9 bis 14, **dadurch gekennzeichnet, dass** auf der Seite der ersten oder zweiten Platte (4a, 4b) eine druckdichte Kammer (11) vorgesehen ist, die durch Überdruck oder Unterdruck, die Bildung von Dekorschnitten im Inneren der Zone (5) zwischen der Greifvorrichtung (6,7) und der Randzone gewährleisten.
